# EUROPEAN PATENT SPECIFICATION

(11) **EP 4 397 689 B1**
(45) Date of publication and mention of the grant of the patent: **31.12.2025**
(21) Application number: 22865064.4
(22) Date of filing: 01.09.2022
(51) Int. Cl.: C08G 63/12, C08G 63/91, C08G 63/183, C08L 67/02

(54) **BIODEGRADABLE POLYESTER POLYMER WITH EXCELLENT TRANSPARENCY AND IMPACT STRENTH AND BIODEGRADABLE POLYMER COMPOSITE CONTAINING THE SAME**
BIOLOGISCH ABBAUBARES POLYESTERPOLYMER MIT AUSGEZEICHNETER TRANSPARENZ UND SCHLAGFESTIGKEIT UND BIOLOGISCH ABBAUBARER POLYMERVERBUNDSTOFF, DER DIESES ENTHÄLT
POLYMÈRE DE POLYESTER BIODÉGRADABLE PRÉSENTANT UNE EXCELLENTE TRANSPARENCE ET UNE EXCELLENTE RÉSISTANCE AUX CHOCS, ET COMPOSITE POLYMÈRE BIODÉGRADABLE LE CONTENANT

(30) Priority: 01.09.2021 KR 20210116597
(43) Date of publication of application: 10.07.2024
(73) Proprietor: Bioplastics Innovations Limited, Hong Kong (HK)
(72) Inventor: KIM, Hyo Yeol, Wonju-si Gangwon-do 26310 (KR)
(74) Representative: Cabinet Beau de Loménie
(86) International application number: PCT/KR2022/013099
(87) International publication number: WO 2023/033562

(56) References cited:
- KR-A- 20050 083 981
- KR-A- 20060 094 419
- KR-B1- 101 255 826
- KR-B1- 102 063 626
- KR-B1- 102 394 168
- US-A1- 2011 071 235
- PAPAGEORGIOU GEORGE Z., BIKIARIS DIMITRIOS N., ACHILIAS DIMITRIS S., NANAKI STAVROULA, KARAGIANNIDIS NIKITAS: "Synthesis and comparative study of biodegradable poly(alkylene sebacate)s", JOURNAL OF POLYMER SCIENCE PART B: POLYMER PHYSICS, vol. 48, no. 6, 15 March 2010 (2010-03-15), US , pages 672 - 686, XP093041257, ISSN: 0887-6266, DOI: 10.1002/polb.21937

## Description

### [TECHNICAL FIELD]

The present invention relates to a biodegradable polyester polymer with excellent transparency and impact strength and a biodegradable polymer composition comprising the same.

### [BACKGROUND ART]

As a solution to environmental pollution caused by the use of plastics, there is proposed a method of using alternative materials such as paper or using biodegradable polymers that are degraded under specific conditions, and research and development thereon is also actively conducted.

Among the biodegradable polymers, starch-based polymers have excellent economic efficiency, but are not often used due to very weak mechanical properties, and instead, polyester polymers are mainly used. The polyester polymers include polybutylene adipate (PBA), polybutylene adipate terephthalate (PBAT), polybutylene succinate (PBS), polycaprolactone (PCL), polylactic acid (PLA), etc.

Among them, PLA as a hard polymer is the cheapest among biodegradable polyester polymers and has good transparency, hardness, and mechanical strength, but is brittle, weak against impact, and has poor tearing properties, so that it is difficult to be applied to products alone. On the other hand, PBAT as a soft polymer has good flexibility and excellent impact strength, but has a disadvantage of insufficient hardness, mechanical strength, and transparency. Therefore, domestic and foreign researchers are conducting research to complement the insufficient physical properties by blending PLA and PBAT.

In Korean Patent Registration No. KR 10-0428687 B1, there was prepared a film with improved tear strength, tensile strength, and elongation by extruding aromatic-aliphatic polyester, aliphatic-polyester, and PLA using a twin-screw extruder. However, in Korean Patent Registration No. KR 10-0428687 B1, the transparency of the film itself was not secured, and when an excessive amount of PLA was added, there was a problem in which the impact strength and elongation rapidly decreased.

In addition, since the compatibility of PLA and PBAT is generally poor, mechanical and thermal properties deteriorate when blending PLA and PBAT, and in order to solve this problem, additives capable of improving compatibility are further added. However, as low molecular weight compounds are included in a molded article, it is difficult to be used for purposes such as packaging containers, and there is a limit to improving physical properties.

Therefore, there is an urgent need for research and development on biodegradable polymers that simultaneously satisfy mechanical properties such as excellent impact strength and transparency. US 2011/071235 discloses polymer materials produced from recycled PET (polyethylene terephthalate), sebacic acid and 1,3-propanediol. KR 102 063 626 B1 discloses a biodegradable copolyester resin obtained from aromatic dicarboxylic acid and aliphatic dicarboxylic acid derived from biomass, wherein raw materials notably include succinic acid or 1,4-butanediol derived from biomass resources. KR 101 255 826 B1 discloses a biodegradable aliphatic/aromatic copolyester resin composition manufactured by: performing esterification and transesterification of aliphatic glycol and aromatic dicarboxylic acid, performing esterification and transesterification of aliphatic dicarboxylic acid and polylactide, and performing polycondensation.

### [DISCLOSURE]

### [TECHNICAL PROBLEM]

In order to solve the problems of the prior art as described above, an object of the present invention is to provide a novel biodegradable polyester polymer with improved transparency and impact strength and a preparing method thereof.

Another object of the present invention is to provide a biodegradable polymer composition including the biodegradable polyester polymer and a molded article using the same.

### [TECHNICAL SOLUTION]

As a result of continuous research to solve the problems, the present inventors found that in the case of a biodegradable polyester polymer prepared from a polymerizable composition including a dicarboxylic compound including aromatic dicarboxylic acid or aromatic dialkylcarboxylate, and aliphatic dicarboxylic acid, an aliphatic glycol compound, and a polypropylene sebacate oligomer, it is possible to realize significantly improved transparency and impact strength, and then completed the present invention.

An embodiment of the present invention provides a biodegradable polyester polymer prepared from: (a) a dicarboxylic compound including aromatic dicarboxylic acid or aromatic dialkylcarboxylate, and aliphatic dicarboxylic acid; (b) an aliphatic glycol compound; and (c) a polymerizable composition including a polypropylene sebacate oligomer, wherein the polypropylene sebacate oligomer has a weight average molecular weight (Mw) of 2,000 to 8,000 g/mol.

According to an embodiment of the present invention, the polypropylene sebacate oligomer may have a weight average molecular weight (Mw) of 2,000 to 6,000 g/mol.

According to an embodiment of the present invention, the aliphatic dicarboxylic acid may be one or a combination of two or more selected from the group consisting of oxalic acid, malonic acid, succinic acid, glutaric acid, adipic acid, pimelic acid, sebacic acid, azelaic acid, 1,9-nonanedicarboxylic acid, 1,10-decanedicarboxylic acid, and anhydride derivatives thereof.

According to an embodiment of the present invention, the aromatic dicarboxylic acid may be one or a combination of two or more selected from the group consisting of phthalic acid, isophthalic acid, and terephthalic acid, and the aromatic dialkyl carboxylate may be one or a combination of two or more selected from the group consisting of dimethyl phthalate, diethyl phthalate, dimethyl isophthalate, diethyl isophthalate, dimethyl terephthalate, and diethyl terephthalate.

According to an embodiment of the present invention, the aliphatic glycol compound may be one or a combination of two or more selected from the group consisting of ethylene glycol, propylene glycol, neopentyl glycol, 1,4-butanediol, 1,5-pentadiol, 1,6-hexanediol, 1,2-octanediol, 1,6-octanediol, 1,9-nonanediol, 1,2-decanediol, and 1,10-decanediol.

According to an embodiment of the present invention, the polypropylene sebacate oligomer may be included in an amount of 0.01 to 1 wt% of the total weight of the polymerizable composition.

According to an embodiment of the present invention, the aromatic dicarboxylic acid or aromatic dialkylcarboxylate may be included in an amount of 45 to 55 wt% of the total weight of the dicarboxylic compound.

According to an embodiment of the present invention, a molar ratio of the dicarboxylic compound and the aliphatic glycol compound may be 1:1.1 to 1.7.

According to an embodiment of the present invention, the biodegradable polyester polymer may have a weight average molecular weight (Mw) of 100,000 to 200,000 g/mol.

According to an embodiment of the present invention, the biodegradable polyester polymer may have a haze value of 50% or less for a film with a thickness of 50 ± 2 µm prepared using the biodegradable polyester polymer, and the haze value may be measured according to ASTM D1003.

Another embodiment of the present invention provides a biodegradable polymer composition including the biodegradable polyester polymer.

According to an embodiment of the present invention, the biodegradable polymer composition may further include one or two or more polyesters selected from the group consisting of polybutylene adipate terephthalate, polybutylene succinate, polycaprolactone, polylactic acid, and polyglycolic acid.

Yet another embodiment of the present invention provides a molded article manufactured through extrusion or injection processing using the biodegradable polymer composition.

According to an embodiment of the present invention, the molded article may include a packaging container, a disposable bag, a disposable household item, or a packaging cushioning material.

Yet another embodiment of the present invention provides a method for preparing a biodegradable polyester polymer including (A) preparing a polypropylene sebacate oligomer by an esterification reaction and then condensation polymerization of sebacic acid and an excess of 1,3-propanediol;

and (B) preparing a polyester polymer by reacting a dicarboxylic compound, an aliphatic glycol compound, and the polypropylene sebacate oligomer.

According to an embodiment of the present invention, in step (A), a molar ratio of the sebacic acid and 1,3-propanediol may be 1:1.1 to 1.5.

### [ADVANTAGEOUS EFFECTS]

According to the present invention, the biodegradable polyester polymer effectively improves the opacity and low mechanical strength of PBAT, which have been problems in the related art, and exhibits improved transparency and impact strength. Further, when the biodegradable polyester polymer is blended with a biodegradable polymer such as PLA, a polypropylene sebacate oligomer portion of the biodegradable polyester polymer improves compatibility, and molded articles manufactured by processing such a biodegradable polymer composition can have further improved mechanical properties, and can be applied for various uses, such as packaging containers, disposable bags, disposable household items, and packaging cushioning materials.

### [BEST MODE FOR CARRYING OUT THE INVENTION]

Hereinafter, the present invention will be described in more detail through specific embodiments or examples including the accompanying drawings. However, the following specific embodiments or examples are only a reference for explaining the present invention in detail, and the present invention is not limited thereto, and may be implemented in various forms.

Further, unless otherwise defined, all technical and scientific terms have the same meaning as commonly understood by those skilled in the art to which the present invention pertains. The terminology used in the description herein is merely to effectively describe specific embodiments and is not intended to limit the present invention.

In addition, as used in the specification and the appended claims, the singular forms may be intended to include plural forms, unless clearly dictated in the contexts otherwise.

Further, unless explicitly described to the contrary, when any part "comprises" any component, it will be understood to further include other components rather than excluding other components.

As used herein, the term "oligomer" refers to a low molecular weight polymer made by polymerization of monomers, and specifically, refers to a polymer with a weight average molecular weight of 100 to 10,000 g/mol.

The present invention may be better understood by the following embodiments, which are for illustrative purposes of the present invention and are not intended to limit the scope of the protection defined by the appended claims.

Hereinafter, an embodiment of the present invention will be described in more detail.

The present invention provides a biodegradable polyester polymer prepared from: (a) a dicarboxylic compound including aromatic dicarboxylic acid or aromatic dialkylcarboxylate, and aliphatic dicarboxylic acid; (b) an aliphatic glycol compound; and (c) a polymerizable composition including a polypropylene sebacate oligomer.

The aromatic dicarboxylic acid preferably has 6 to 50 or 6 to 30 carbon atoms, and non-limiting examples thereof may be one or a combination of two or more selected from the group consisting of phthalic acid, isophthalic acid, terephthalic acid, etc. The aromatic dialkyl carboxylate preferably has 6 to 50 or 6 to 30 carbon atoms, and non-limiting examples thereof may be one or a combination of two or more selected from the group consisting of dimethyl phthalate, diethyl phthalate, dimethyl isophthalate, diethyl isophthalate, dimethyl terephthalate, and diethyl terephthalate, etc. Preferably, dimethyl terephthalate may be used. At this time, the aromatic dicarboxylic acid or aromatic dialkylcarboxylate may be included in the amount of 35 to 65 wt% or 45 to 55 wt% of the total weight of the dicarboxylic compound, and when satisfying the range, it is possible to manufacture molded articles with excellent heat resistance and improved biodegradability.

The aliphatic dicarboxylic acid preferably has 2 to 30 or 2 to 20 carbon atoms, and non-limiting examples thereof may be one or a combination of two or more selected from the group consisting of oxalic acid, malonic acid, succinic acid, glutaric acid, adipic acid, pimelic acid, sebacic acid, azelaic acid, 1,9-nonanedicarboxylic acid, 1,10-decanedicarboxylic acid and anhydride derivatives thereof, etc. Preferably, adipic acid may be used. The content of the aliphatic dicarboxylic acid may be 35 to 65 wt% or 45 to 55 wt% of the total weight of the dicarboxylic compound.

The aforementioned dicarboxylic compound including the aromatic dicarboxylic acid or aromatic dialkylcarboxylate and aliphatic dicarboxylic acid may be included in the amount of 40 to 80 wt% or 40 to 70 wt% of the total weight of the polymerizable composition.

The aliphatic glycol compound preferably has 2 to 30 or 2 to 20 carbon atoms, and non-limiting examples thereof may be one or a combination of two or more selected from the group consisting of ethylene glycol, propylene glycol, neopentyl glycol, 1,4-butanediol, 1,5-pentadiol, 1,6-hexanediol, 1,2-octanediol, 1,6-octanediol, 1,9-nonanediol, 1,2-decanediol and 1,10-decanediol, etc. Preferably, ethylene glycol, 1,4-butanediol, 1,6-hexanediol, or a combination thereof may be used. The aliphatic glycol compound may be included in the amount of 20 to 60 wt%, or 30 to 60 wt% of the total weight of the polymerizable composition.

Preferably, the content of 1,4-butanediol may be 70 mol% or more, or 80 mol% to 100 mol% of the total weight of the aliphatic glycol compound, but is not greatly limited as long as it does not impair the desired physical properties in the present invention.

According to an embodiment of the present invention, a molar ratio of the dicarboxylic compound and the aliphatic glycol compound may be 1:1.0 to 2.5, preferably 1.1 to 2.0, and more preferably 1.1 to 1.7. When the range is satisfied, the desired physical properties in the present invention may be achieved and a polymer with stable reactivity and economical advantage may be prepared.

According to an embodiment of the present invention, the polypropylene sebacate oligomer may be commonly used or prepared by a known method, and may be purchased and used as a commercially available product, but preferably may be prepared through the method for preparing the polypropylene sebacate oligomer according to an embodiment of the present invention.

The polypropylene sebacate oligomer of the present invention has a weight average molecular weight (Mw) of 2,000 to 8,000 g/mol. In addition, the dispersity index may be 1 to 5, preferably 1 to 3, but is not limited thereto. When preparing the biodegradable polyester polymer including the polypropylene sebacate oligomer that satisfies the above range, transparency and impact strength may be effectively improved, and a biodegradable polymer composition including the biodegradable polyester polymer may have further improved compatibility to realize excellent transparency and mechanical strength.

According to an embodiment of the present invention, the polypropylene sebacate oligomer may be included in an amount of 0.001 to 2 wt%, preferably 0.01 to 1 wt%, and more preferably 0.05 to 0.5 wt% of the total weight of the polymerizable composition. When the above range is satisfied, reactivity may be stabilized when the biodegradable polyester polymer is prepared, and the prepared polymer may simultaneously realize improved impact strength and excellent transparency.

Furthermore, the polypropylene sebacate oligomer may exist in the form of a block copolymer in a polymer backbone of the biodegradable polyester polymer, and as a separate segment, the polypropylene sebacate oligomer improves the transparency of the polymer itself and mechanical properties such as impact strength and tensile strength. In addition, when blended with other biodegradable polymers, it is very good in that excellent compatibility between the biodegradable polyester polymer and other biodegradable polymers may be achieved, thereby securing more significant tensile strength, impact strength, elongation, and transparency.

According to an embodiment of the present invention, the biodegradable polyester polymer may have a number average molecular weight (Mn) of 30,000 to 200,000 g/mol, preferably 40,000 to 150,000 g/mol or 50,000 to 100,000 g/mol. In addition, a weight average molecular weight (Mw) may be 50,000 to 500,000 g/mol, 80,000 to 300,000 g/mol, or 100,000 to 200,000 g/mol, and a melting temperature (Tm) may be 80 to 150°C or 90 to 140°C.

In addition, the biodegradable polyester polymer may have an acid value of 2.0 mg KOH/g or less, specifically 1.5 mg KOH/g or less, and more specifically 1.2 mg KOH/g or less, or 1.0 mg KOH/g or less, and the lower limit is not particularly limited, but may be greater than 0 mg KOH/g or 0.1 mg KOH/g or greater. When the acid value range is satisfied, the tensile strength and tear strength of the biodegradable polyester polymer may be further improved.

According to an embodiment according to the present invention, the biodegradable polyester polymer may have a haze value of 60% or less, preferably 50% or less, and more preferably 45% or less in a 50 ± 2 µm-thick film manufactured using the biodegradable polyester polymer, and the lower limit is not particularly limited, but may be 1% or more. The haze value is measured according to ASTM D1003. When the above range is satisfied, a biodegradable polyester polymer with improved transparency may be secured, and when molded articles are manufactured using the biodegradable polyester polymer, the biodegradable polyester polymer can be applied even to products requiring transparency, which may expand marketability.

According to an embodiment of the present invention, the biodegradable polymer composition may further include other types of biodegradable polymers to complement the physical properties of the biodegradable polyester polymer, and specifically, further include one or two or more polyesters selected from the group consisting of polybutylene adipate terephthalate (hereinafter referred to as PBAT), polybutylene succinate (hereinafter referred to as PBS), polycaprolactone (hereinafter referred to as PCL), polylactic acid (hereinafter referred to as PLA) and polyglycolic acid (hereinafter referred to as PGA), etc. In addition, the polyester may be included in an amount of 1 to 150 parts by weight, preferably 1 to 100 parts by weight, and more preferably 5 to 70 parts by weight or 10 to 50 parts by weight, based on 100 parts by weight of the biodegradable polyester polymer. However, the content of the biodegradable polymer composition may be adjusted to realize physical properties suitable for the use, and is not limited to the above range.

Among the polyesters, PLA has excellent transparency, hardness, and mechanical strength, and thus, PLA is also generally used to be blended with PBAT, but the compatibility of PLA and PBAT is not good. Molded articles manufactured from these polymer compositions exhibit insufficient tensile strength, impact strength, and tear strength, thereby making it impossible to realize all the advantages of PLA and PBAT, and has a disadvantage that transparency decreases as the content of PBAT increases. However, the biodegradable polymer composition according to a preferred embodiment of the present invention exhibits significantly improved compatibility by containing the above-described polyester polymer and PLA, and molded articles manufactured from the composition have advantages of not only realizing more improved mechanical properties such as tensile strength, impact strength, and tear strength and excellent elongation, but also effectively improving transparency. The PLA may use commercially available products without limitation, and may have a weight average molecular weight of 50,000 to 500,000 g/mol or 80,000 to 300,000 g/mol, and a melting temperature (Tm) of 140 to 200°C or 150 to 190°C, but is not limited thereto as long as it does not impair the desired physical properties in the present invention. The PLA may be included in an amount of 0.1 to 200 parts by weight, preferably 1 to 150 parts by weight, and more preferably 1 to 120 parts by weight, based on 100 parts by weight of the polyester polymer. However, the content of the PLA may be adjusted to realize physical properties suitable for the use, and is not limited to the above range.

In addition, among the polyesters, PBS is a biodegradable polymer with excellent biodegradability and crystallinity and a relatively low melting temperature. In the case of a biodegradable polymer composition including the PBS, processability may be improved and the biodegradability of the manufactured molded article may be improved. Preferably, the biodegradable polymer composition includes the above-mentioned biodegradable polyester polymer and PBS together, so that the compatibility of the composition may be improved, and the molded article manufactured from the composition may realize improved biodegradability and mechanical properties such as tensile strength. In addition, since a heat distortion temperature (HDT) of PBS is superior to that of other biodegradable polymers, the PBS may help in improving the thermal stability of the manufactured molded article. The PBS may use commercially available products without limitation, and may have a weight average molecular weight of 100,000 to 500,000 g/mol or 120,000 to 300,000 g/mol, and a melting temperature (Tm) of 80 to 140°C or 90 to 130°C. The PBS may be included in an amount of 0.1 to 80 parts by weight, preferably 1 to 50 parts by weight, and more preferably 1 to 30 parts by weight, based on 100 parts by weight of the biodegradable polyester polymer. However, the content of the PBS may be adjusted to realize physical properties suitable for the use, and is not limited to the above range.

According to an embodiment of the present invention, the biodegradable polymer composition may further include commonly added additives, and non-limiting examples thereof may further include one or two or more additives selected from the group consisting of an antioxidant, a UV absorber, a sunscreen, a UV stabilizer, starch, and an inorganic material. The content of the additives is not particularly limited as long as the content does not impair the desired physical properties in the present invention.

The antioxidant may be used with a phenol-based antioxidant, an aromatic amine-based antioxidant, a phosphorus-based antioxidant and a sulfur-based antioxidant, etc, and may be used with any antioxidant that is commonly used or known without great limitations, and used with commercially available products. The content of the antioxidant may be 0.001 to 5 wt%, or 0.01 to 2 wt%, based on the total weight of the biodegradable polymer composition, but is not limited thereto.

The UV absorber may be used with any UV absorber commonly used or known without great limitations, and for example, a benzotriazole-based UV absorber, etc. Non-limiting examples of the benzotriazole-based UV absorber may include 2-(2'-hydroxyphenyl)benzotriazole, 2-(2'-hydroxy-5'-methylphenyl)benzotriazole, 2-(3',5'-di-tert-butyl-2'-Hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl-5-chlorobenzotriazole and bis[2-hydroxy-5-t-octyl-3-(benzotriazol-2-yl)phenyl]methane, etc., but are not limited thereto, and may be used with any commercially available product without limitation. The content of the UV absorber may be 0.001 to 5 wt%, or 0.01 to 3 wt%, based on the total weight of the biodegradable polymer composition, but is not limited thereto.

The sunscreen may also serve as a pigment, and non-limiting examples thereof may include one or two or more selected from barium sulfate, bentonite, calcium sulfate, iron(III) oxide, ferric hydroxide, kaolin, carbon black, copper oxide, magnesium oxide, silver, silicon dioxide, syloid, hydrophobic alkylated silicon dioxide, talc, titanium dioxide (TiO₂), bismuth oxychloride, zinc oxide, zinc stearate and melanin, etc., but are not limited thereto, and may be used with any commercially available product without limitation. The content of the sunscreen may be 0.1 to 10 wt%, or 0.5 to 5 wt%, based on the total weight of the biodegradable polymer composition, but is not limited thereto.

The UV stabilizer may be used with any UV stabilizer commonly used or known without great limitations, and for example, a HALS-based UV stabilizer, etc. Non-limiting examples of the HALS-based UV stabilizer may be one or two or more selected from the group consisting of 1,1-bis(2,2,6,6-tetramethyl-4-piperidyl)succinate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzylmalonate, tris(2,2,6,6-tetramethyl-4-piperidyl)nitrilotriacetate and tetrakis(2,2,6,6-tetramethyl-4-piperidyl)-1,2,3,4-butane tetracarboxylate, etc., but are not limited thereto, and may be used with any commercially available product. The content of the UV stabilizer may be 0.001 to 5 wt%, or 0.01 to 3 wt%, based on the total weight of the biodegradable polymer composition, but is not limited thereto.

The starch may be used to improve biodegradability, and may be specifically thermoplastic starch. Non-limiting examples of the thermoplastic starch may be used with rice starch, wheat starch, corn starch, sweet potato starch, potato starch, tapioca starch, cassava starch, and modified starches thereof, etc. The modified starch may mean α-starch, acid-treated starch, oxidized starch, amphoteric starch, ester starch, and ether starch, etc., that are prepared by physically or chemically treating the starch. The content of the starch may be 0.1 to 20 wt%, or 0.5 to 10 wt%, based on the total weight of the biodegradable polymer composition, but is not limited thereto.

The inorganic material may be used to improve mechanical and thermal properties or workability, and non-limiting examples thereof may be used with calcium carbonate, talc, carbon black, bentonite, silica, mica, quartzite, wood flour, chalk, Woolas-tonite, diatomite, etc. The content of the inorganic material may be 0.1 to 25 wt%, or 1 to 20 wt%, based on the total weight of the biodegradable polymer composition, but is not limited thereto.

Hereinafter, a method for preparing a biodegradable polyester polymer according to an embodiment of the present invention will be described in more detail.

The present invention provides a method for preparing a biodegradable polyester polymer including (A) preparing a polypropylene sebacate oligomer by an esterification reaction and then condensation polymerization of sebacic acid and an excess of 1,3-propanediol; and (B) preparing a polyester polymer by reacting a dicarboxylic compound, an aliphatic glycol compound, and the polypropylene sebacate oligomer.

Step (A) may include (A-1) preparing a precursor by an esterification reaction of sebacic acid and an excess of 1,3-propanediol, and (A-2) preparing a polypropylene sebacate oligomer by condensation polymerization of the precursor.

Specifically, step (A-1) may be performed by satisfying a molar ratio of sebacic acid and 1,3-propanediol of 1:1.0 to 3.0, preferably 1:1.1 to 2.0, and more preferably 1:1.1 to 1.5 under conditions of a reaction temperature of 200 to 250°C, preferably 200 to 220°C, and the esterification reaction may be performed using a titanium-based catalyst as a catalyst. A precursor of the polypropylene sebacate oligomer may be prepared through the esterification reaction. Non-limiting examples of the titanium-based catalyst may include tetraethyl titanate, tetra-n-propyl titanate, tetra-isopropyl titanate, tetrabutyl titanate, tetra-isobutyl titanate, butyl-isopropyl titanate, etc., but are not limited thereto. The content of the titanium-based catalyst may be 0.00001 to 1 parts by weight, or 0.0001 to 0.15 parts by weight, based on 100 parts by weight, which is the total weight of the sebacic acid and 1,3-propanediol, but is not limited thereto as long as the content does not impair the desired physical properties in the present invention.

In addition, step (A-1) may be performed at a reaction temperature of 200 to 260°C, preferably 220 to 240°C, and a vacuum condition of 67 to 133 Pascals (0.5 to 1 Torr), and the polypropylene sebacate oligomer may be prepared by condensation polymerization of the precursor. The condensation polymerization time may be 1 to 30 minutes, preferably 3 to 15 minutes, and when the above range is satisfied, a polypropylene sebacate oligomer satisfying the above-mentioned molecular weight range may be prepared, and a biodegradable polyester polymer prepared including the polypropylene sebacate oligomer may secure improved impact strength and transparency.

In In addition, in the esterification reaction and condensation polymerization step, a stabilizer may be further added in addition to the catalyst, and non-limiting examples thereof may be used with phosphorous acid, triphenyl phosphate, etc., but are not limited thereto. The content of the stabilizer may be 0.000001 to 1 parts by weight, or 0.000005 to 0.1 parts by weight, based on 100 parts by weight, which is the total weight of the sebacic acid and 1,3-propanediol, but is not limited thereto as long as the content does not impair the desired physical properties in the present invention.

As the 1,3-propanediol is added in excess in step (A), a terminal of the polypropylene sebacate oligomer may have a hydroxy group. In particular, when the sebacic acid and 1,3-propanediol are in the molar ratio range, it is preferable that the polypropylene sebacate oligomer prepared may satisfy the molecular weight range described above.

Step (B) of preparing the polyester polymer by reacting the dicarboxylic compound, the aliphatic glycol compound, and the polypropylene sebacate oligomer may include (B-1) preparing a precursor by reacting the dicarboxylic compound, the aliphatic glycol compound, and the polypropylene sebacate oligomer; and (B-2) preparing a polyester polymer by condensation polymerization of the precursor.

Specific descriptions of the dicarboxylic compound and the aliphatic glycol compound in step (B-1) and examples of the compounds are the same as those described above.

In a specific embodiment, in step (B-1), an esterification reaction and a transesterification reaction may be performed, and the order thereof may change depending on a raw material to be added. In step (B-1), an esterification reaction and a transesterification reaction as a first reaction are performed at a temperature of 180 to 220°C by first adding aromatic dicarboxylic acid or aromatic dialkylcarboxylate of the dicarboxylic compounds, the aliphatic glycol compound, and the catalyst, and then an esterification reaction as a second reaction may be performed at a temperature of 180 to 230°C by adding aliphatic carboxylic acid and the catalyst. The catalyst may be a titanium-based catalyst, and examples of specific compounds are the same as described above. The content of the catalyst may be 0.00001 to 1 parts by weight, or 0.0001 to 0.15 parts by weight, based on 100 parts by weight, which is the total weight of the dicarboxylic compound and the aliphatic glycol compound, but is not limited thereto as long as the content does not impair the desired physical properties in the present invention.

As another specific aspect, an esterification reaction as a first reaction is performed at a temperature of 180 to 220°C by first adding the aliphatic carboxylic acid, the aliphatic glycol compound and the catalyst, and then an esterification reaction and a transesterification reaction as a second reaction may be performed at a temperature of 180 to 230°C by adding aromatic dicarboxylic acid or aromatic dialkylcarboxylate of the dicarboxylic compounds and the catalyst. The catalyst may be a titanium-based catalyst, and examples and contents of specific compounds are the same as described above.

The polypropylene sebacate oligomer is copolymerized by adding the compounds together during the first or second reaction in step (B-1). The content of the polypropylene sebacate oligomer may be 0.001 to 5 parts by weight, preferably 0.001 to 1 parts by weight, and more preferably 0.01 to 0.5 parts by weight, based on 100 parts by weight of the total weight of the dicarboxylic compound and the aliphatic glycol compound.

Step (B-2) of preparing the polyester polymer by condensation polymerization of the precursor may be performed under a reaction temperature condition of 200 to 260°C, preferably 220 to 250°C, in the presence of an antimony oxide, tin oxide or zinc oxide catalyst. The content of the catalyst may be 0.00001 to 1 parts by weight, or 0.0001 to 0.5 parts by weight, based on 100 parts by weight, which is the total weight of the dicarboxylic compound and the aliphatic glycol compound, but is not limited thereto as long as the content does not impair the desired physical properties in the present invention.

In another aspect, the polypropylene sebacate oligomer may also be added in step (B-2) rather than step (B-1).

In the condensation polymerization step, a stabilizer may be further added in addition to the catalyst, and non-limiting examples thereof may be used with phosphorous acid, triphenyl phosphate, etc., but are not limited thereto. The content of the stabilizer may be 0.000001 to 1 parts by weight, or 0.000005 to 0.1 parts by weight, based on 100 parts by weight, which is the total weight of the dicarboxylic compound and the aliphatic glycol compound, but is not limited thereto as long as the content does not impair the desired physical properties in the present invention.

The present invention may provide a molded article manufactured through extrusion or injection processing using the biodegradable polymer composition described above. Specifically, the molded article may be a packaging container, a disposable bag, a disposable household item, or a packaging cushioning material. The processing method of the molded article may be used without great limitations as long as it is a commonly used or known method, and for example, methods such as casting, extrusion, injection, blow molding, etc. may be used, and an extrusion or injection processing method may be preferably used. The molded article may realize physical properties suitable for the use to be applied by appropriately controlling the content of the ingredients of the biodegradable polymer composition described above. The molded article may have excellent mechanical strength such as tensile strength, impact strength, and tear strength, excellent elongation and improved transparency.

Hereinafter, the present invention will be described in more detail through Examples and Comparative Examples. However, the following Examples and Comparative Examples are only one example to describe the present invention in more detail, and the present invention is not limited by the following Examples and Comparative Examples.

### [Method for measuring physical properties]

1) Molecular weight (Mn, Mw): A sample with an oligomer or resin concentration of 1 wt% in THF was prepared, and the weight average molecular weight and the number average molecular weight thereof were measured using gel permeation chromatography (GPC, Waters2690 model HPLC/RI Detector). Polystyrene (PS) was used as a standard sample, and measured by setting a flow rate to 1.0 mL/min and a column temperature to 40.0°C.
2) Tensile strength: Polymers according to Examples or Comparative Examples were extruded to manufacture a film with a thickness of 50 ± 2 µm, and the tensile strength was measured using an ISO527 test method. The tensile strength was measured under measurement conditions of 500 mm/min rate.
3) Spencer Impact strength: Polymers according to Examples or Comparative Examples were extruded to manufacture a film with a thickness of 50 ± 2 µm, and the impact strength was measured using an ASTM 3420 test method.
4) Transparency (Haze): Polymers according to Examples or Comparative Examples were extruded to manufacture a film with a thickness of 50 ± 2 µm, and the transparency was measured using an ASTM D1003 test method.

### [Preparation Example 1] Preparation of polypropylene sebacate oligomer

202.2 g (1 mol) of sebacic acid, 95.1 g (1.25 mol) of 1,3-propanediol, 0.031 g of tetrabutyl titanate, and 0.002 g of phosphorous acid as a stabilizer were added to a 500 ml round bottom flask, and then an esterification reaction was performed while gradually increasing the temperature to 200 to 210°C. After water was completely discharged, condensation polymerization was performed for 5 minutes while gradually increasing the temperature from 230°C at a vacuum degree of 133 Pascals (1 torr). After completion of the reaction, a polypropylene sebacate oligomer according to Preparation Example 1 was finally obtained. The weight average molecular weight of the oligomer measured using GPC was 4250 g/mol.

### [Preparation Example 2] Preparation of polypropylene sebacate polymer

A polypropylene sebacate polymer was obtained by performing the reaction in the same manner as Preparation Example 1, except for adding 76.1 g (1 mol) of 1,3-propanediol from Preparation Example 1, but stopping the reaction when an appropriate high viscosity was obtained. The weight average molecular weight of the polymer was 54,200 g/mol.

### - Preparation of biodegradable polyester polymer

### [Example 1]

91.3 g (0.47 mol) of dimethyl terephthalate (DMT) and 135.2 g (1.5 mol) of 1,4-butanediol were added to a 500 ml round bottom flask, and then added with 0.062 g of tetrabutyl titanate as a catalyst and 0.3 g of the polypropane sebacate oligomer of Preparation Example 1 after slowly increasing the temperature at 80°C, and a transesterification reaction (first) was performed at 210°C. After methanol was completely discharged, 62.6 g (0.52 mol) of succinic acid and 0.062 g of tetrabutyl titanate as a catalyst were added and then an esterification reaction (second) was performed at a vacuum degree of 133 Pascals (1 torr) and a temperature of 220°C. After water was completely discharged, 0.03 g of antimony oxide and 0.02 g of triphenyl phosphate were added, and then condensation polymerization was performed at 240°C. After completion of the reaction, a biodegradable polyester polymer according to Example 1 was finally obtained.

### [Example 2]

65.7 g (0.45 mol) of adipic acid and 117.1 g (1.3 mol) of 1,4-butanediol were added to a 500 ml round bottom flask, and then added with 0.062 g of tetrabutyl titanate as a catalyst after slowly increasing the temperature at 80°C, and an esterification reaction (first) was performed at 210°C. After water was completely discharged, 106.8 g (0.55 mol) of dimethyl terephthalate, 0.4 g of the polypropane sebacate oligomer of Preparation Example 1, and 0.06 g of tetrabutyl titanate as a catalyst were added and then a transesterification reaction (second) was performed at a vacuum degree of 133 Pascals (1 torr) and a temperature of 200°C. After methanol was completely discharged, 0.05 g of antimony oxide and 0.02 g of triphenyl phosphate were added, and then condensation polymerization was performed at 245°C. After completion of the reaction, a biodegradable polyester polymer according to Example 2 was finally obtained.

### [Example 3]

92.2 g (0.48 mol) of dimethyl terephthalate, 112.6 g (1.25 mol) of 1,4-butanediol, 3.1 g (0.05 mol) of ethylene glycol and 5.9 g (0.05 mol) of 1,6-hexanediol were added to a 500 ml round bottom flask, and then added with 0.062 g of tetrabutyl titanate as a catalyst after slowly increasing the temperature at 80°C, and a transesterification reaction (first) was performed at 210°C. After methanol was completely discharged, 76.0 g (0.52 mol) of adipic acid, 0.5 g of the polypropane sebacate oligomer of Preparation Example 1, and 0.03 g of tetrabutyl titanate as a catalyst were added and then an esterification reaction (second) was performed at a vacuum degree of 133 Pascals (1 torr) and a temperature of 210°C. After water was completely discharged, 0.04 g of tin oxide and 0.02 g of triphenyl phosphate were added, and then condensation polymerization was performed at 240°C. After completion of the reaction, a biodegradable polyester polymer according to Example 3 was finally obtained.

### [Example 4]

99 g (0.51 mol) of dimethyl terephthalate and 121.6 g (1.35 mol) of 1,4-butanediol were added to a 500 ml round bottom flask, and then added with 0.062 g of tetrabutyl titanate as a catalyst after slowly increasing the temperature at 80°C, and a transesterification reaction (first) was performed at 210°C. After methanol was completely discharged, 71.6 g (0.49 mol) of adipic acid and 0.06 g of tetrabutyl titanate as a catalyst were added and then an esterification reaction (second) was performed at a vacuum degree of 133 Pascals (1 torr) and a temperature of 210°C. After water was completely discharged, 0.7 g of the polypropane sebacate oligomer of Preparation Example 1, 0.07 g of antimony oxide, and 0.02 g of triphenyl phosphate were added, and then condensation polymerization was performed at 235°C. After completion of the reaction, a biodegradable polyester polymer according to Example 4 was finally obtained.

### [Example 5]

76.0 g (0.52 mol) of adipic acid, 11.8 g (0.1 mol) of 1,6-hexanediol, and 126.1 g (1.4 mol) of 1,4-butanediol were added to a 500 ml round bottom flask, and then added with 0.06 g of tetrabutyl titanate as a catalyst after slowly increasing the temperature at 80°C, and an esterification reaction (first) was performed at 210°C. After water was completely discharged, 93.2 g (0.48 mol) of dimethyl terephthalate and 0.06 g of tetrabutyl titanate as a catalyst were added and then a transesterification reaction (second) was performed at a vacuum degree of 133 Pascals (1 torr) and a temperature of 210°C. After methanol was completely discharged, 0.9 g of the polypropane sebacate oligomer of Preparation Example 1, 0.05 g of zinc oxide, and 0.02 g of triphenyl phosphate were added, and then condensation polymerization was performed at 235°C. After completion of the reaction, a biodegradable polyester polymer according to Example 5 was finally obtained.

### [Example 6]

97.1 g (0.5 mol) of dimethyl terephthalate, 3.1 g (0.05 mol) of ethylene glycol, and 130.6 g (1.45 mol) of 1,4-butanediol were added to a 500 ml round bottom flask, and then added with 0.021 g of tetrabutyl titanate as a catalyst after slowly increasing the temperature at 80°C, and a transesterification reaction (first) was performed at 210°C. After methanol was completely discharged, 73.1 g (0.5 mol) of adipic acid and 0.037 g of tetrabutyl titanate as a catalyst were added and then an esterification reaction (second) was performed at a vacuum degree of 133 Pascals (1 torr) and a temperature of 210°C. After water was completely discharged, 1.0 g of the polypropane sebacate oligomer of Preparation Example 1, 0.037 g of antimony oxide, and 0.017 g of triphenyl phosphate were added, and then condensation polymerization was performed at 240°C. After completion of the reaction, a biodegradable polyester polymer according to Example 6 was finally obtained.

### [Example 7]

67.2 g (0.46 mol) of adipic acid and 126.1 g (1.4 mol) of 1,4-butanediol were added to a 500 ml round bottom flask, and then added with 0.071 g of tetrabutyl titanate as a catalyst after slowly increasing the temperature at 80°C, and an esterification reaction (first) was performed at 210°C. After water was completely discharged, 104.9 g (0.54 mol) of dimethyl terephthalate, 1.2 g of the polypropane sebacate oligomer of Preparation Example 1, and 0.047 g of tetrabutyl titanate as a catalyst were added and then a transesterification reaction (second) was performed at a vacuum degree of 133 Pascals (1 torr) and a temperature of 210°C. After methanol was completely discharged, 0.03 g of zinc oxide and 0.017 g of triphenyl phosphate were added, and then condensation polymerization was performed at 240°C. After completion of the reaction, a biodegradable polyester polymer according to Example 7 was finally obtained.

### [Comparative Example 1]

Comparative Example 1 was performed in the same manner as Example 2, except from Example 2 that the polypropane sebacate oligomer of Preparation Example 1 was not added.

### [Comparative Example 2]

Comparative Example 2 was performed in the same manner as Example 6, except from Example 6 that the polypropane sebacate oligomer of Preparation Example 1 was not added.

### [Comparative Example 3]

Comparative Example 3 was performed in the same manner as Example 2, except from Example 2 that the polypropane sebacate polymer of Preparation Example 2 was added instead of the polypropane sebacate oligomer of Preparation Example 1. Comparative Example 3 had poor reactivity, and the haze of the obtained polymer was measured as 87% and the impact strength was measured as 22000 mN.

The compositions of Examples 1 to 7 and Comparative Examples 1 and 2 were shown in Table 1 below.

**[Table 1]**

| Step | (g) | Example 1 | Example 2 | Example 3 | Example 4 | Example 5 | Example 6 | Example 7 | Comparative Example 1 | Comparative Example 2 |
|---|---|---|---|---|---|---|---|---|---|---|
| First | DMT | 91.3 | - | 92.2 | 99.0 | - | 97.1 | - | - | 97.1 |
| | Adipic acid | - | 65.7 | - | - | 76 | - | 67.2 | 65.7 | - |
| | 1,4 butanediol | 135.2 | 117.1 | 112.6 | 121.6 | 126.1 | 130.6 | 126.1 | 117.1 | 130.6 |
| | Ethylene glycol | - | - | 3.1 | - | - | 3.1 | - | - | 3.1 |
| | 1.6-hexanediol | - | - | 5.9 | - | 11.8 | - | - | - | - |
| | Preparation Example 1 | 0.3 | - | - | - | - | - | - | - | - |
| Second | DMT | - | 106.8 | - | - | 93.2 | - | 104.9 | 106.8 | - |
| | Adipic acid | - | - | 76 | 71.6 | - | 73.1 | - | - | 73.1 |
| | Succinic acid | 62.6 | - | - | - | - | - | - | - | - |
| | Preparation Example 1 | - | 0.4 | 0.5 | - | - | - | 1.2 | - | - |
| Condensation polymerization | Preparation Example 1 | - | - | - | 0.7 | 0.9 | 1 | - | - | - |
| Physical property | Haze [%] | 48 | 45 | 42 | 39 | 37 | 37 | 32 | 63 | 67 |
| | Mn [g/mol] | 52000 | 54000 | 61000 | 69000 | 72000 | 74000 | 79000 | 46000 | 43000 |
| | Mw [g/mol] | 110000 | 100900 | 121000 | 131000 | 144000 | 151000 | 153000 | 80100 | 59000 |
| | Impact strength [mN] | 36743 | 37400 | 40100 | 42000 | 43200 | 46700 | 49800 | 29700 | 32000 |

### - DMT: dimethyl terephthalate

As shown in Table 1 above, when a biodegradable polyester polymer was prepared using the polypropane sebacate oligomer according to Preparation Example 1, it was confirmed that the transparency was improved with Haze of 50% or less, the number average molecular weight was 50,000 g/mol or more, the weight average molecular weight was 100,000 g/mol or more, and the impact strength was measured as 35000 mN or more to have further improved transparency and impact strength than conventional polymers prepared without including PBAT or a polypropane sebacate oligomer.

### [Examples 8 to 11 and Comparative Examples 4 and 5] Preparation of biodegradable polymer composition

200 g of a UV absorber (SONGSORB-3600) was added to a biodegradable polymer composition constituted according to Table 2 in a supermixer with a total capacity of 200 Kg, and mixed with the supermixer for 5 minutes, and then pellets were prepared with a twin-screw extruder at a cylinder temperature of 160°C. The pellets were dried in a dehumidifying dryer for 8 hours and then a 50 µm film was manufactured using a single sheet extruder. The physical properties of the manufactured film were measured and shown in Table 2 below.

**[Table 2]**

| (kg) | Example 8 | Example 9 | Example 10 | Example 11 | Comparative Example 4 | Comparative Example 5 |
|---|---|---|---|---|---|---|
| Example 2 | 50 | 50 | | | | |
| Example 7 | | | 50 | 50 | | |
| Comparative Example 1 | | | | | 50 | |
| PBAT | | | | | | 50 |
| PLA | 50 | 40 | 50 | 40 | 50 | 50 |
| PBS | | 10 | | 10 | | |
| Haze [%] | 31 | 34 | 25 | 27 | 60 | 59 |
| Impact strength [mN] | 54800 | 55200 | 85200 | 86700 | 30900 | 41600 |

### - PBAT: GIO SOLTECH, SOLPOL 1000 (Tm: 120°C)

### - PBS: ANKOR Bioplastics, BG5000M (Tm: 115-118°C)

### - PLA: Total-Corbion, LX175 (Tm: 155°C)

As shown in Table 2, the films according to Examples 8 to 11 showed excellent transparency (Haze of 40% or less) and impact strength (50000 mN or more), and it was confirmed that as all biodegradability test results, the biodegradability after 45 days was 60% or more.

In the case of a molded article (film) manufactured using the biodegradable polyester polymer according to the present invention, it was confirmed that compatibility with other biodegradable polymers was better and improved mechanical properties such as transparency and impact strength may be realized.

As described above, the present invention has been described by specified matters such as detailed components, and the like and limited embodiments and drawings, but the description is just provided to assist more overall understanding of the present invention and the present invention is not limited to the embodiments, but various modifications and changes can be made by those skilled in the art from such a disclosure.

Therefore, the spirit of the present invention should not be defined only by the described exemplary embodiments, and it should be appreciated that claims to be described below and all equivalent to the claims or equivalently modified to the claims are included in the scope of the spirit of the present invention.

## Claims

1. A biodegradable polyester polymer prepared from: (a) a dicarboxylic compound including aromatic dicarboxylic acid or aromatic dialkylcarboxylate, and aliphatic dicarboxylic acid; (b) an aliphatic glycol compound; and (c) a polymerizable composition including a polypropylene sebacate oligomer,
wherein the polypropylene sebacate oligomer has a weight average molecular weight (Mw) of 2,000 to 8,000 g/mol as measured by the method outlined in the description.

2. The biodegradable polyester polymer of claim 1, wherein the polypropylene sebacate oligomer has a weight average molecular weight (Mw) of 2,000 to 6,000 g/mol as measured by the method outlined in the description.

3. The biodegradable polyester polymer of claim 1, wherein the aliphatic dicarboxylic acid is one or a combination of two or more selected from the group consisting of oxalic acid, malonic acid, succinic acid, glutaric acid, adipic acid, pimelic acid, sebacic acid, azelaic acid, 1,9-nonanedicarboxylic acid, 1,10-decanedicarboxylic acid, and anhydride derivatives thereof.

4. The biodegradable polyester polymer of claim 1, wherein the aromatic dicarboxylic acid is one or a combination of two or more selected from the group consisting of phthalic acid, isophthalic acid, and terephthalic acid, and
the aromatic dialkyl carboxylate is one or a combination of two or more selected from the group consisting of dimethyl phthalate, diethyl phthalate, dimethyl isophthalate, diethyl isophthalate, dimethyl terephthalate, and diethyl terephthalate.

5. The biodegradable polyester polymer of claim 1, wherein the aliphatic glycol compound is one or a combination of two or more selected from the group consisting of ethylene glycol, propylene glycol, neopentyl glycol, 1,4-butanediol, 1,5-pentadiol, 1,6-hexanediol, 1,2-octanediol, 1,6-octanediol, 1,9-nonanediol, 1,2-decanediol, and 1,10-decanediol.

6. The biodegradable polyester polymer of claim 1, wherein the polypropylene sebacate oligomer is included in an amount of 0.01 to 1 wt% of the total weight of the polymerizable composition.

7. The biodegradable polyester polymer of claim 1, wherein the aromatic dicarboxylic acid or aromatic dialkylcarboxylate is included in an amount of 45 to 55 wt% of the total weight of the dicarboxylic compound.

8. The biodegradable polyester polymer of claim 1, wherein a molar ratio of the dicarboxylic compound and the aliphatic glycol compound is 1:1.1 to 1.7.

9. The biodegradable polyester polymer of claim 1, wherein the biodegradable polyester polymer has a weight average molecular weight (Mw) of 100,000 to 200,000 g/mol as measured by the method outlined in the description.

10. The biodegradable polyester polymer of claim 1, wherein the biodegradable polyester polymer has a haze value of 50% or less for a film with a thickness of 50 ± 2 µm prepared using the biodegradable polyester polymer, and the haze value is measured according to ASTM D1003.

11. A biodegradable polymer composition comprising the biodegradable polyester polymer according to any one of claims 1 to 10.

12. The biodegradable polymer composition of claim 11, further comprising:
one or two or more polyesters selected from the group consisting of polybutylene adipate terephthalate, polybutylene succinate, polycaprolactone, polylactic acid, and polyglycolic acid.

13. A molded article manufactured through extrusion or injection processing using the biodegradable polymer composition according to claim 11.

14. The molded article of claim 13, wherein the molded article includes a packaging container, a disposable bag, a disposable household item, or a packaging cushioning material.

15. A method for preparing a biodegradable polyester polymer comprising:
(A) preparing a polypropylene sebacate oligomer by an esterification reaction and then condensation polymerization of sebacic acid and an excess of 1,3-propanediol; and
(B) preparing a polyester polymer by reacting a dicarboxylic compound, an aliphatic glycol compound, and the polypropylene sebacate oligomer,
wherein the polypropylene sebacate oligomer has a weight average molecular weight (Mw) of 2,000 to 8,000 g/mol as measured by the method outlined in the description.

16. The method for preparing the biodegradable polyester polymer of claim 15, wherein in step (A), a molar ratio of the sebacic acid and 1,3-propanediol is 1:1.1 to 1.5.

## Patentansprüche

1. Ein biologisch abbaubares Polyesterpolymer, hergestellt aus: (a) einer Dicarbonsäureverbindung, einschließlich einer aromatischen Dicarbonsäure oder eines aromatischen Dialkylcarboxylats und einer aliphatischen Dicarbonsäure; (b) einer aliphatischen Glykolverbindung; und (c) einer polymerisierbaren Zusammensetzung, die ein Polypropylensebacat-Oligomer enthält,
wobei das Polypropylensebacat-Oligomer ein gewichtsmittleres Molekulargewicht (Mw) von 2.000 bis 8.000 g/mol aufweist, gemessen nach dem in der Beschreibung angegebenen Verfahren.

2. Biologisch abbaubare Polyesterpolymer nach Anspruch 1, wobei das Polypropylensebacat-Oligomer ein gewichtsmittleres Molekulargewicht (Mw) von 2.000 bis 6.000 g/mol aufweist, gemessen nach dem in der Beschreibung angegebenen Verfahren.

3. Biologisch abbaubare Polyesterpolymer nach Anspruch 1, wobei die aliphatische Dicarbonsäure eine oder eine Kombination von zwei oder mehr aus der Gruppe ausgewählt ist (sind), die aus Oxalsäure, Malonsäure, Bernsteinsäure, Glutarsäure, Adipinsäure, Pimelinsäure, Sebacinsäure, Azelainsäure, 1,9-Nonandicarbonsäure, 1,10-Decandicarbonsäure und deren Anhydridderivaten besteht.

4. Biologisch abbaubare Polyesterpolymer nach Anspruch 1, wobei die aromatische Dicarbonsäure eine oder eine Kombination von zwei oder mehr aus der Gruppe ausgewählt ist (sind), die aus Phthalsäure, Isophthalsäure und Terephthalsäure besteht, und
das aromatische Dialkylcarboxylat eines oder eine Kombination von zwei oder mehr aus der Gruppe ausgewählt ist (sind), die aus Dimethylphthalat, Diethylphthalat, Dimethylisophthalat, Diethylisophthalat, Dimethylterephthalat und Diethylterephthalat besteht.

5. Biologisch abbaubare Polyesterpolymer nach Anspruch 1, wobei die aliphatische Glykolverbindung eine oder eine Kombination aus zwei oder mehr aus der Gruppe ausgewählt ist (sind), die aus Ethylenglykol, Propylenglykol, Neopentylglykol, 1,4-Butandiol, 1,5-Pentandiol, 1,6-Hexandiol, 1,2-Octandiol, 1,6-Octandiol, 1,9-Nonandiol, 1,2-Decandiol und 1,10-Decandiol besteht.

6. Biologisch abbaubare Polyesterpolymer nach Anspruch 1, wobei das Polypropylensebacat-Oligomer in einer Menge von 0,01 bis 1 Gew.-% des Gesamtgewichts der polymerisierbaren Zusammensetzung enthalten ist.

7. Biologisch abbaubare Polyesterpolymer nach Anspruch 1, wobei die aromatische Dicarbonsäure oder das aromatische Dialkylcarboxylat in einer Menge von 45 bis 55 Gew.-% des Gesamtgewichts der Dicarbonsäureverbindung enthalten ist.

8. Biologisch abbaubare Polyesterpolymer nach Anspruch 1, wobei ein Molverhältnis der Dicarbonsäureverbindung und der aliphatischen Glykolverbindung 1:1,1 bis 1,7 beträgt.

9. Biologisch abbaubare Polyesterpolymer nach Anspruch 1, wobei das biologisch abbaubare Polyesterpolymer ein gewichtsmittleres Molekulargewicht (Mw) von 100.000 bis 200.000 g/mol aufweist, gemessen nach dem in der Beschreibung beschriebenen Verfahren.

10. Biologisch abbaubare Polyesterpolymer nach Anspruch 1, wobei das biologisch abbaubare Polyesterpolymer einen Trübungswert ("haze value") von 50 % oder weniger für eine Folie mit einer Dicke von 50 ± 2 µm aufweist, die unter Verwendung des biologisch abbaubaren Polyesterpolymers hergestellt wurde, und der Trübungswert gemäß ASTM D1003 gemessen wird.

11. Eine biologisch abbaubare Polymerzusammensetzung, umfassend das biologisch abbaubare Polyesterpolymer gemäß einem der Ansprüche 1 bis 10.

12. Biologisch abbaubare Polymerzusammensetzung nach Anspruch 11, die ferner umfasst:
einen oder zwei oder mehr Polyester, ausgewählt aus der Gruppe bestehend aus Polybutylenadipat-Terephthalat, Polybutylensuccinat, Polycaprolacton, Polymilchsäure und Polyglykolsäure.

13. Ein Formteil, das durch Extrusions- oder SpritzgießensVerfahren, unter Verwendung der biologisch abbaubaren Polymerzusammensetzung gemäß Anspruch 11, hergestellt wird.

14. Formteil gemäß Anspruch 13, wobei das Formteil einen Verpackungsbehälter, einen Einwegbeutel, einen Einweg-Haushaltsartikel oder ein Verpackungs-Polstermaterial umfasst.

15. Verfahren zur Herstellung eines biologisch abbaubaren Polyesterpolymers, umfassend:
(A) Herstellen eines Polypropylensebacat-Oligomers durch eine Veresterungsreaktion und anschließende Kondensationspolymerisation von Sebacinsäure und einem Überschuss an 1,3-Propandiol; und
(B) Herstellen eines Polyesterpolymers durch Umsetzung einer Dicarbonsäureverbindung, einer aliphatischen Glykolverbindung und des Polypropylensebacat-Oligomers,
wobei das Polypropylensebacat-Oligomer ein gewichtsmittleres Molekulargewicht (Mw) von 2.000 bis 8.000 g/mol aufweist, gemessen nach dem in der Beschreibung beschriebenen Verfahren.

16. Verfahren zur Herstellung des biologisch abbaubaren Polyesterpolymers nach Anspruch 15, wobei in Schritt (A) ein Molverhältnis von Sebacinsäure und 1,3-Propandiol 1:1,1 bis 1,5 beträgt.

## Revendications

1. Polymère polyester biodégradable préparé à partir de : (a) un composé dicarboxylique incluant un acide dicarboxylique aromatique ou un dialkylcarboxylate aromatique, et un acide dicarboxylique aliphatique; (b) un composé glycol aliphatique; et (c) une composition polymérisable incluant un oligomère de sébacate de polypropylène,
dans lequel l'oligomère de sébacate de polypropylène a une masse moléculaire moyenne en masse (Mw) de 2 000 à 8 000 g/mol telle que mesurée par la méthode détaillée dans la description.

2. Polymère polyester biodégradable selon la revendication 1, dans lequel l'oligomère de sébacate de polypropylène a une masse moléculaire moyenne en masse (Mw) de 2 000 à 6 000 g/mol telle que mesurée par la méthode détaillée dans la description.

3. Polymère polyester biodégradable selon la revendication 1, dans lequel l'acide dicarboxylique aliphatique est un ou une combinaison de deux ou plus choisis dans le groupe constitué de : acide oxalique, acide malonique, acide succinique, acide glutarique, acide adipique, acide pimélique, acide sébacique, acide azélaïque, acide 1,9-nonanedicarboxylique, acide 1,10-decanedicarboxylique, et leurs dérivés anhydride.

4. Polymère polyester biodégradable selon la revendication 1, dans lequel l'acide dicarboxylique aromatique est un ou une combinaison de deux ou plus choisis dans le groupe constitué de : acide phtalique, acide isophtalique, et acide téréphtalique, et
le dialkylcarboxylate aromatique est un ou une combinaison de deux ou plus choisis dans le groupe constitué de : phtalate de diméthyle, phtalate de diéthyle, isophtalate de diméthyle, isophtalate de diéthyle, téréphtalate de diméthyle, et téréphtalate de diéthyle.

5. Polymère polyester biodégradable selon la revendication 1, dans lequel le compose glycol aliphatique est un ou une combinaison de deux ou plus choisis dans le groupe constitué de : éthylène glycol, propylène glycol, néopentyl glycol, 1,4-butanediol, 1,5-pentanediol, 1,6-hexanediol, 1,2-octanediol, 1,6-octanediol, 1,9-nonanediol, 1,2-décanediol, et 1,10-décanediol.

6. Polymère polyester biodégradable selon la revendication 1, dans lequel l'oligomère de sébacate de polypropylène est inclus en une quantité de 0,01 à 1% en masse de la masse totale de la composition polymérisable.

7. Polymère polyester biodégradable selon la revendication 1, dans lequel l'acide dicarboxylique aromatique ou le dialkylcarboxylate aromatique est inclus en une quantité de 45 à 55% en masse de la masse totale du composé dicarboxylique.

8. Polymère polyester biodégradable selon la revendication 1, dans lequel un rapport molaire du composé dicarboxylique au composé glycol aliphatique est de 1:1,1 à 1,7.

9. Polymère polyester biodégradable selon la revendication 1, qui a une masse moléculaire moyenne en masse (Mw) de 100 000 à 200 000 g/mol telle que mesurée par la méthode détaillée dans la description.

10. Polymère polyester biodégradable selon la revendication 1, qui a une valeur de voile ("haze value") de 50% ou moins pour un film de 50 ± 2 µm d'épaisseur préparé en utilisant le polymère polyester biodégradable, et la valeur de voile est mesurée selon ASTM D1003.

11. Composition de polymère biodégradable comprenant le polymère polyester biodégradable selon l'une quelconque des revendications 1 à 10.

12. Composition de polymère biodégradable selon la revendication 11, qui comprend en outre :
un ou deux ou plus polyesters choisis dans le groupe constitué de : adipate téréphthalate de polybutylène, succinate de polybutylène, polycaprolactone, acide polylactique, et acide polyglycolique.

13. Article moulé fabriqué par un procédé d'extrusion ou d'injection en utilisant la composition de polymère biodégradable selon la revendication 11.

14. Article moulé selon la revendication 13, qui inclut un contenant d'emballage, un sac jetable, un article ménager jetable ou un matériau de rembourrage d'emballage.

15. Procédé de préparation d'un polymère polyester biodégradable qui comprend :
(A) la preparation d'un oligomère de sébacate de polypropylène par reaction d'estérifcation puis de polymérisation par condensation d'acide sébacique et d'un excès de 1,3-propanediol; et
(B) la preparation d'un polymère polyester par reaction d'un composé dicarboxylique, d'un composé glycol aliphatique, et de l'oligomère de sébacate de polypropylène,
où l'oligomère de sébacate de polypropylène a une masse moléculaire moyenne en masse (Mw) de 2 000 à 8 000 g/mol telle que mesurée par la méthode détaillée dans la description.

16. Procédé de préparation d'un polymère polyester biodégradable selon la revendication 15, dans lequel dans l'étape (A), un rapport molaire de l'acide sébacique au 1,3-propanediol est de 1:1,1 à 1,5.
